# EUROPEAN PATENT APPLICATION

(11) **EP 4 632 276 A1**
(43) Date of publication of application: **15.10.2025**
(21) Application number: 25169321.4
(22) Date of filing: 09.04.2025
(51) Int. Cl.: F24C 7/08, D06F 39/14, F24C 15/00, F24C 15/04, F25D 29/00

(54) **DOOR FOR HOME APPLIANCE**

(30) Priority: 09.04.2024 KR 20240047872
(71) Applicant: LG Electronics Inc., Yeongdeungpo-gu Seoul 07336 (KR)
(72) Inventor: LEE, Yong Hyun, 08592 Seoul (KR); PARK, Kyoung-Joon, 08592 Seoul (KR); YANG, Hak Soon, 08592 Seoul (KR); LEE, SuYong, 08592 Seoul (KR)
(74) Representative: Vossius & Partner Patentanwälte Rechtsanwälte mbB

(57) **Abstract**

Proposed are a door for a home appliance and a home appliance including the same. The door includes a door body (70, 80, 90) disposed in front of a storage space (41) of the home appliance, and a door panel (G) coupled to the door body (70, 80, 90). The door panel (G) includes a plurality of panels. A door interior space surrounded by the door body (70, 80, 90) and the door panel (G) is formed. A camera assembly (160) for acquiring an image of the storage space (41) is disposed in the door interior space. In this case, the plurality of panels includes a front panel (Ga) constituting a front surface of the door panel (G, and a rear panel (IP) disposed to be spaced apart rearward from the front panel (Ga).

## Description

### CROSS REFERENCE TO RELATED APPLICATION

The present application claims priority to Korean Patent Application No. 10-2024-0047872, filed April 9, 2024, the entire contents of which are incorporated herein for all purposes by this reference.

### BACKGROUND OF THE INVENTION

### Field of the Invention

The present disclosure relates to a door for a home appliance and a home appliance including the same.

### Description of the Related Art

Home appliances that have a door and accommodate objects in interior space, such as cooking appliances, refrigerators, and clothes processors, are widely used. These home appliances may have a storage space for accommodating an object inside a cabinet constituting an exterior, and a door for opening and closing the storage space.

Recently, various electronic components are installed inside the door of a home appliance. For example, the door may be equipped with a light to illuminate objects in the interior space. Alternatively, a camera may be installed on the door to capture an image of an object. The electronic components may illuminate or photograph obj ects in the interior space through a transparent part formed in the door.

In this case, the door of the home appliance may include a plurality of stacked glass panels. In addition, the camera may be arranged between the plurality of panels so as to reduce the influence of the inner temperature and humidity of the home appliance on the camera. Here, the panels may be made of a transparent material, such as glass.

However, if the camera is arranged between the plurality of panels, a ghosting phenomenon may occur in which an object outside the home appliance is reflected between the panels and captured by the camera. In this way, when the external object is captured by the camera, the external object overlaps with an object inside the home appliance, making it impossible to provide an accurate image to a user.

In particular, when a user is positioned in front of the home appliance, the user's appearance may be reflected on the panels of the door and captured by the camera. If the user's appearance is captured by the camera, the user's privacy is violated.

In addition, the plurality of glass panels may reflect light emitted from a light arranged on the outside of the home appliance or from a light arranged inside the home appliance. This reflected light is transmitted to the camera, which may cause light diffusion or flare in a captured image acquired by the camera.

To solve this, the transparent part of the glass panels may be reduced to block a path through which an image of an object outside the home appliance is transmitted to the camera. However, this reduces an area in which a user can directly observe the inside of the home appliance, and a widened bezel damages the beauty of the door.

Additionally, the surfaces of the glass panels of the door may be printed or deposited to give the glass panels specific colors. When the glass panels have specific colors, the beauty of the door may be improved, but the light transmittance of the glass panels decreases. In this case, the camera obtains the image of the interior of the storage space through the glass panels, and thus the reduced light transmittance reduces the quality of the image captured by the camera.

Meanwhile, even if the camera is arranged between the glass panels that constitute the door, the internal heat of the home appliance may be transmitted to the inside of the door and damage the camera. Especially, when the home appliance is a cooking appliance such as an oven, a very high temperature is transmitted to the inside of the door when the home appliance is in operation, and thus the risk of damage to the camera increases.

In addition, if a temperature inside the door is high, the refractive index of light inside the door may change, causing a distorted image to be transmitted to the camera. In this case, the accuracy of the image acquired through the camera decreases, and as a result, the quality of the home appliance decreases.

### SUMMARY OF THE INVENTION

Accordingly, the present disclosure has been made keeping in mind the above problems occurring in the related art, and the purpose of the present disclosure is to dispose a camera device at a location outside a reflective area inside a door from which external light (visible light) is reflected so that the reflected external light does not reach the camera device.

Another purpose of the present disclosure is to have a capture window separate from a door panel so that the camera device captures clearer images.

Another purpose of the present disclosure is to place a cooling device around the camera device disposed inside the door, thereby lowering the temperatures of the camera device and the surroundings of the camera device.

In order to achieve the objectives of the present disclosure, according to the characteristics of the present disclosure, a door for home appliance of the present disclosure may include a door body arranged in front of a storage space of the home appliance, and a door panel coupled to the door body. The door panel may include a plurality of panels. A door interior space surrounded by the door body and the door panel may be formed. A camera assembly for acquiring an image of the storage space may be arranged in the door interior space.

The plurality of panels may include a front panel constituting a front surface of the door panel and a rear panel arranged to be spaced apart rearward from the front panel. In addition, the camera assembly may be arranged at a position outside an area in which the front panel and the rear panel face each other. Accordingly, the camera device may be located outside a path in which light reflects between the panels, so no external light may reach the camera device. Accordingly, the camera device may accurately capture only an image of an object arranged inside the home appliance, and quality of the image captured by the camera device may be improved.

The camera assembly may be disposed between the plurality of panels, outside the transparent part.

Additionally, the camera assembly may be disposed outside a perimeter part of the rear panel.

In addition, the camera assembly may be spaced apart from a surface of the front panel toward the storage space.

Additionally, the camera assembly may be disposed to be spaced apart from each of the front panel and the rear panel.

In addition, the door body may include a capture window which allows the storage space to be seen in the direction of the camera assembly.

Additionally, the capture window which allows the storage space to be seen may be provided outside the perimeter part of the rear panel. The capture window may be disposed between the camera assembly and the storage space.

In addition, the capture window may be configured by stacking a plurality of capture panels on top of each other.

Additionally, the door body may include a cooling device which discharges air in the direction of the camera assembly.

In addition, the cooling device may draw air from the front of the door body and discharge the drawn air in the direction of the camera assembly.

Additionally, on the basis of a direction orthogonal to a direction in which the front panel and the rear panel are spaced apart from each other, a perimeter part of the front panel may extend further outward than the perimeter part of the rear panel so that a panel perimeter part is provided on an edge of the front panel. The panel perimeter part may be formed to have lower light transmittance than the transparent part. The camera assembly may be disposed on the rear of the panel perimeter part.

In addition, a body penetration part may be formed through the door body, and a window assembly may be disposed in the body penetration part. The window assembly may include a window frame disposed in the body penetration part, and the capture window which transmits light from the storage space to the camera assembly.

Additionally, the window frame may include a mounting frame disposed in the body penetration part and having a first penetration part formed in a center thereof so that the capture window is disposed in the first penetration part. The window frame may include a pressing frame coupled to the mounting frame and having a second penetration part formed in a center thereof to be connected to the first penetration part, with the pressing frame configured to press the capture window in a direction of the body penetration part.

In addition, the window frame may include an inclined part formed to be inclined in the direction of the storage space. The camera assembly may be arranged in the inclined direction of the inclined part.

Additionally, the camera assembly may include a mounting housing provided on the door body. A cooling flow path through which air flows may be formed between the mounting housing and the inclined part.

In addition, the camera assembly may be fixed to the door body. The camera assembly may be disposed between the front panel and the rear panel.

Additionally, the camera assembly may include the mounting housing fixed to the door body, and a camera part which is disposed in the mounting housing and faces the storage space. In this case, at least a portion of the mounting housing may be disposed on the rear of the panel perimeter part of the front panel.

In addition, a cooling part through which outside air is introduced may be formed in the door body. The cooling flow path connected to the cooling part may be formed between the camera assembly and the door body.

Additionally, the camera assembly may further include the cooling device for circulating air. The cooling device may draw air from the outside of the door body and discharge the air in the direction of the camera assembly.

In addition, the mounting housing may include a main housing part fixed to a front frame, with the camera part disposed in the main housing part. The mounting housing may include a flow path housing part coupled to the main housing part, with the cooling flow path formed between the main housing part and the flow path housing part. In this case, the main housing part may have a housing penetration part formed in a center thereof so as to draw outside air and transmit the air in a direction of the cooling flow path. A first end part of the cooling flow path may be open toward the housing penetration part, and a second end part of the cooling flow path may be open toward the camera part.

Additionally, the cooling device may be disposed in the housing penetration part so as to discharge air in the direction of the cooling flow path. The first end part of the cooling flow path may be open toward the cooling device, and the second end part of the cooling flow path may be open toward the camera part.

In addition, the main housing part may include a housing body fixed to the front frame and having the housing penetration part formed in a center thereof. The main housing part may include an extension body connected to the housing body and extending in the direction of the storage space. In this case, the camera part may be disposed in the extension body.

Additionally, the camera assembly, and the window assembly which allows the storage space to be seen may be disposed in the door body. The cooling flow path may be formed between the camera assembly and the window assembly. The first end part of the cooling flow path may be connected to the outside of the door body, and the second end part of the cooling flow path may be open toward the camera part of the camera assembly.

In addition, the cooling flow path may be formed in a downward inclined direction toward the camera part.

Additionally, the camera part may be spaced apart from the capture window of the window assembly. The cooling flow path may be connected to a space between the camera part and the capture window.

In addition, a capturing space may be formed between the surface of the front panel, an edge of the rear panel, the window frame, and the mounting housing. The camera assembly may be disposed in the capturing space.

Additionally, the camera assembly and the window assembly may be disposed at different heights on the basis of a direction orthogonal to a direction in which the front panel and the rear panel are spaced apart from each other.

In addition, the capturing space in which the camera assembly is disposed may be formed outside the perimeter part of the rear panel. The door interior space may include a shielding fence which blocks an area between the capturing space and the front panel.

Additionally, the shielding fence may be provided between a lower portion of the camera assembly and an upper portion of the rear panel.

As described above, the door for a home appliance according to the present disclosure may have the following effects.

In the present disclosure, the camera device may be disposed inside the door so as to be outside a position at which a plurality of panels (such as glass), which are reflectors, face each other. Accordingly, the camera device may be located outside a path in which light reflects between the panels, so no external light may reach the camera device. Accordingly, the camera device may accurately capture the image of only an object placed inside the home appliance, thereby improving the quality of the image captured by the camera device.

In particular, since the camera device is located outside the path of light reflected between the panels of the door, the image of a user located in front of the home appliance may be prevented from being transmitted to the inside of the door and captured by the camera device. Accordingly, the door of the present disclosure may prevent the privacy of a user from being infringed by shooting of the camera device.

In addition, in the present disclosure, the camera device may be arranged outside the perimeter part of the rear panel of the door panel. Accordingly, even if external light reflects off the rear panel, the external light may not reach the camera device. In addition, the outside of the perimeter part of the rear panel is located closer to the storage space than the front panel of the door, and thus this may create more favorable conditions for acquiring images of the storage space.

Additionally, in the present disclosure, the camera device may capture the storage space through a separate capture window rather than through the door panel. Accordingly, even if the light transmittance of the door panel is lowered for the purpose of improving beauty or preventing reflection, the camera device may obtain a clear image through the capture window with high light transmittance. Therefore, image quality may be improved.

Additionally, in the present disclosure, the camera device may be provided on the door body, not the door panel (glass, etc.). Since the camera device is installed in the door body so as to be spaced apart from the panels, (i) the installation of the camera device may be easy, (ii) when the door body is made of an injection-molded material with low thermal conductivity, heat conducted to the camera device may be reduced, and (iii) concern about the camera device being exposed through the door panel may be reduced.

In addition, in the present disclosure, a cooling flow path through which external air flows after being introduced may be formed around the camera device. The cooling flow path may lower the temperature of the camera device, thereby increasing the durability of the camera device. In addition, when the ambient temperature of the camera device is lowered, the phenomenon of distorted images being captured due to light being refracted by a high temperature around the camera device may be prevented.

Additionally, the door may be provided with a cooling device, such as a cooling fan. The cooling device may discharge cold air outside the door through the cooling flow path to the camera device. In this case, overheating of the camera device may be prevented, thereby improving operational reliability thereof.

In particular, the camera device may be cooled, and thus may be disposed at a position closer to the storage space of a high temperature. Accordingly, the camera device may have greater freedom in installation and may secure a variety of angles of view.

In addition, the cooling device may cool not only the camera device but also other electronic components inside the door, and in particular, may lower the surface temperature of the door panel. Accordingly, when a user manipulates the door the risk of a burn may be reduced.

Additionally, in the present disclosure, when the mounting housing is installed in the door body, the camera device disposed in the mounting housing may also be installed inside the door. Accordingly, ease of installation of the camera device may be improved, and there is no need to fix the camera device to the door panel, thereby increasing reliability of the installation of the camera device.

In addition, in the present disclosure, when the mounting housing for fixing the camera device and the window assembly for fixing the capture window (glass, etc.) are installed, the cooling flow path may be naturally formed between the mounting housing and the window assembly. Accordingly, even without creating a separate cooling flow path inside the door, the cooling flow path surrounding the camera device may be secured.

Additionally, in the present disclosure, the camera device may be disposed outside the perimeter part of the rear panel, so a viewing angle of for viewing the storage space from above may be secured. This allows for capturing a larger area of the storage space and improving the quality of the captured images.

In addition, the camera device may have an appropriate installation angle through the mounting housing. Accordingly, a separate work process for setting the shooting angle of the camera device may be omitted, and as a result, there is an advantage in that the installation convenience of the camera device is high.

Additionally, in the present disclosure, the camera device may be disposed in the capturing space surrounded by the panels of the door, the window frame, and the mounting housing. The capturing space may provide the cooling flow path, in which air flows, around the camera device, and may increase the freedom of the shooting angle of the camera device.

In addition, in the present disclosure, the capture window may consist of the plurality of panels. The plurality of panels may reduce heat transferred to the camera device, thereby increasing the durability of the camera device.

Additionally, in the present disclosure, the interior of the door may be provided with the shielding fence in a direction in which a space between the front panel and the camera device is blocked. When the shielding fence blocks the space between the front panel and the camera device, external light passing through the front panel may be blocked by the shielding fence and be prevented from reaching the camera device. Accordingly, external images may be prevented from being captured by the camera device. In addition, since the shielding fence is located on the reflection path of light toward the camera device, there is no need to make the panel perimeter part (a type of bezel) for preventing light reflection larger. Accordingly, the openness of the door may be increased to improve beauty thereof.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view showing a first embodiment of a home appliance to which the first embodiment of a door for the home appliance of the present disclosure is applied;
FIG. 2 is a cross-sectional view showing an interior structure of the home appliance to which the first embodiment of the door for a home appliance of the present disclosure is applied;
FIG. 3 is a perspective view showing the structure of the door for a home appliance according to the first embodiment of the present disclosure;
FIG. 4 is an exploded perspective view showing components constituting the door for a home appliance according to the first embodiment of the present disclosure;
FIG. 5 is a perspective view showing a state in which a rear frame, an inner frame, and a rear panel constituting the door for a home appliance are omitted according to the first embodiment of the present disclosure;
FIG. 6 is a perspective view showing the state in which the rear frame, the inner frame, and the rear panel constituting the door for a home appliance are omitted according to the first embodiment of the present disclosure from a different angle than that of FIG. 5;
FIG. 7 is a perspective view showing the structure of the rear frame and the rear panel constituting the door for a home appliance according to the first embodiment of the present disclosure;
FIG. 8 is a cross-sectional view showing the interior structure of the door for a home appliance and the direction of light transmission according to the first embodiment of the present disclosure;
FIG. 9 is a cross-sectional view showing the interior structure of the door for a home appliance and the direction of air flow according to the first embodiment of the present disclosure;
FIG. 10 is an exploded perspective view showing the rear frame, the inner frame, the rear panel, and a window frame constituting the door for a home appliance according to the first embodiment of the present disclosure;

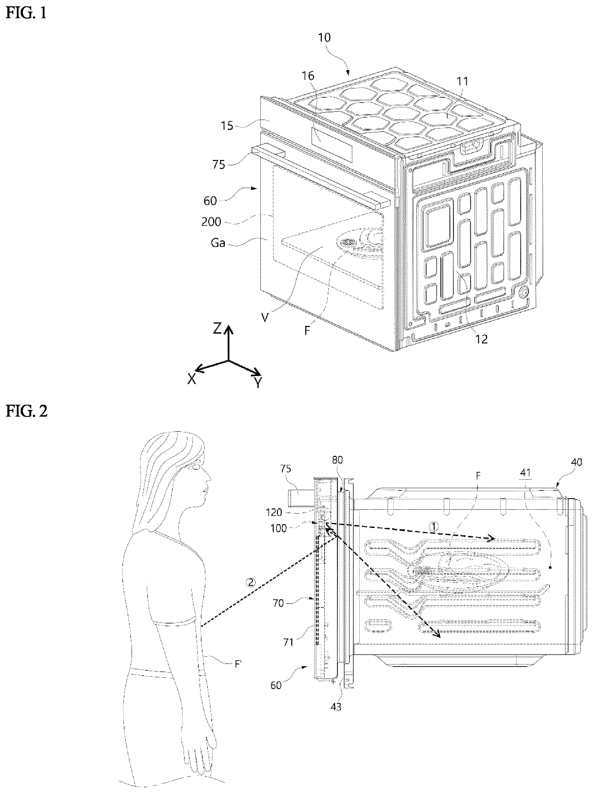

FIG. 1 1 is a cross-sectional view showing the window frame constituting the door for a home appliance is mounted to the rear frame and the inner frame according to the first embodiment of the present disclosure;

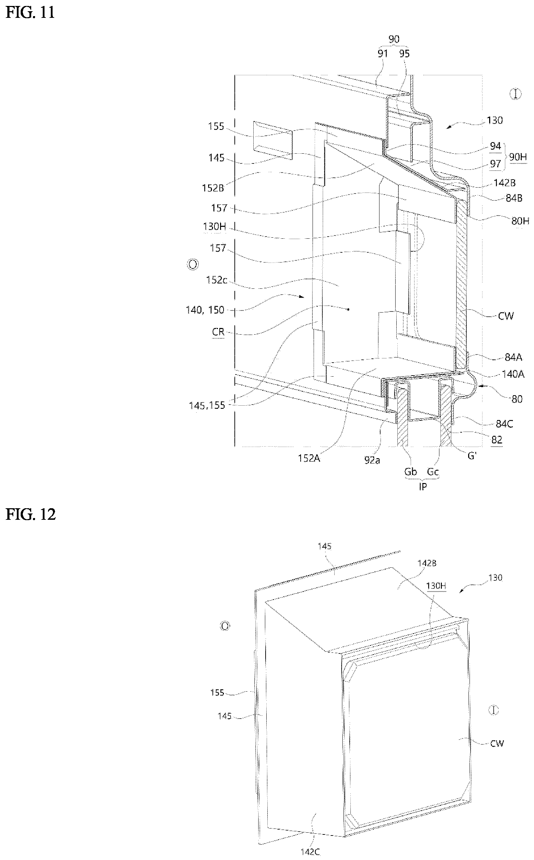

FIG. 12 is a perspective view showing the structure of the window frame constituting the door for a home appliance according to the first embodiment of the present disclosure;

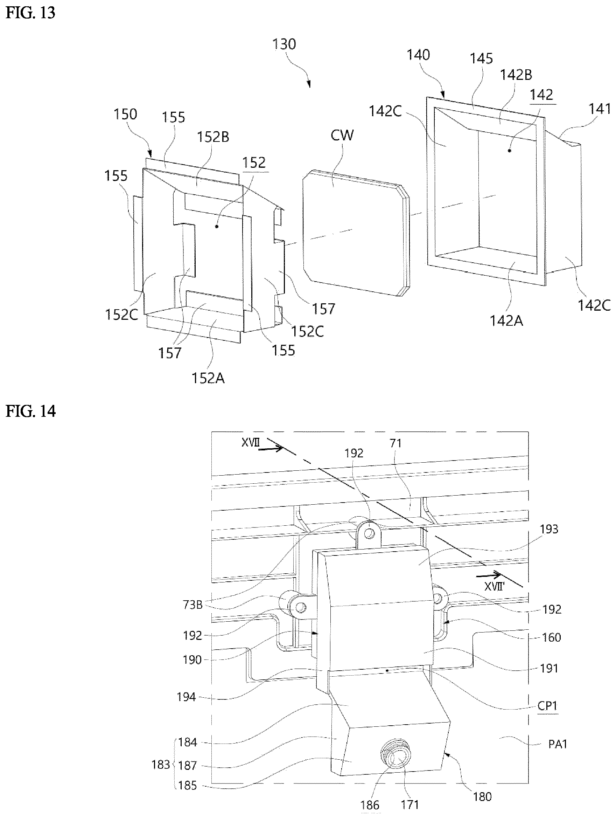

FIG. 13 is an exploded perspective view of the structure of the window frame constituting the door for a home appliance according to the first embodiment of the present disclosure;
FIG. 14 is a perspective view showing a mounting housing installed on the door for a home appliance according to the first embodiment of the present disclosure;

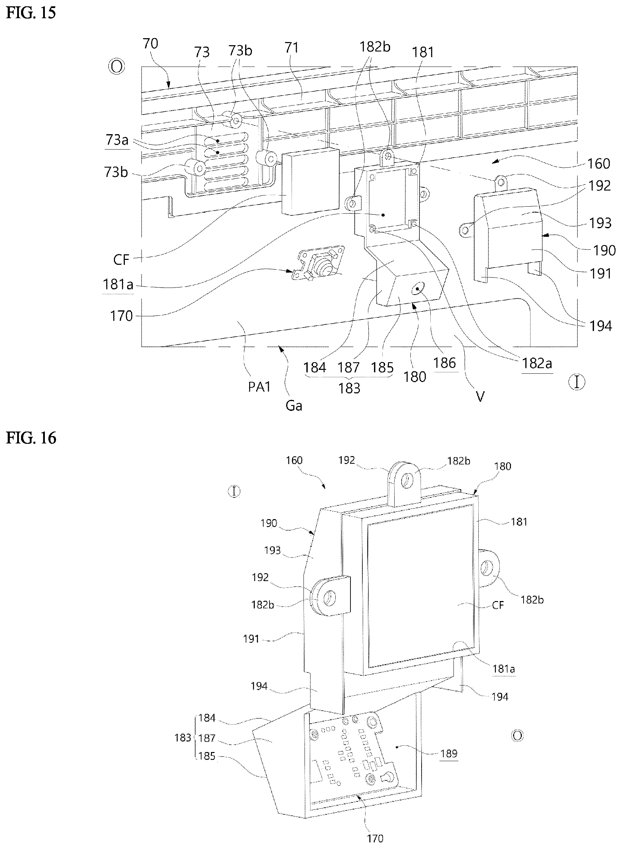

FIG. 15 is an exploded perspective view of a front frame constituting the door for a home appliance, the mounting housing disposed on a front panel, and the camera device according to the first embodiment of the present disclosure;
FIG. 16 is a perspective view showing the structure of the mounting housing and the camera device constituting the door for a home appliance according to the first embodiment of the present disclosure;

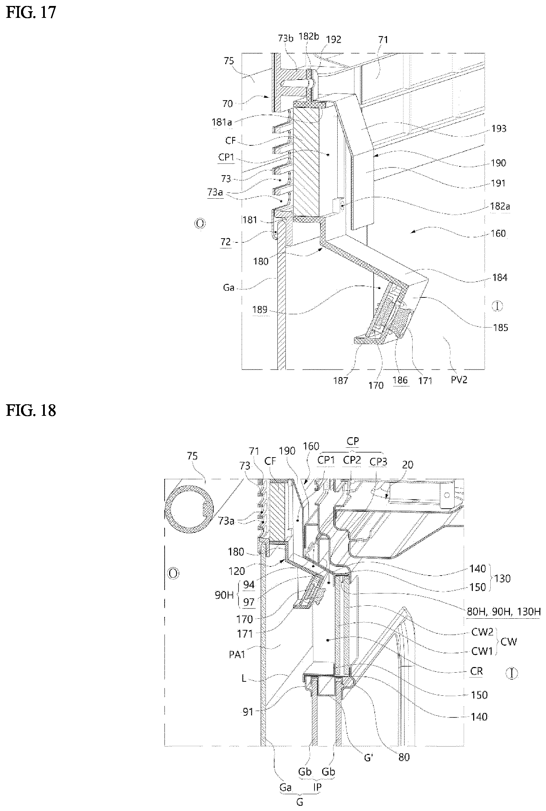

FIG. 17 is a cross-sectional view taken along line XVII-XVII' of FIG. 14;
FIG. 18 is a cross-sectional view showing an interior structure of the door for a home appliance according to a second embodiment of the present disclosure;

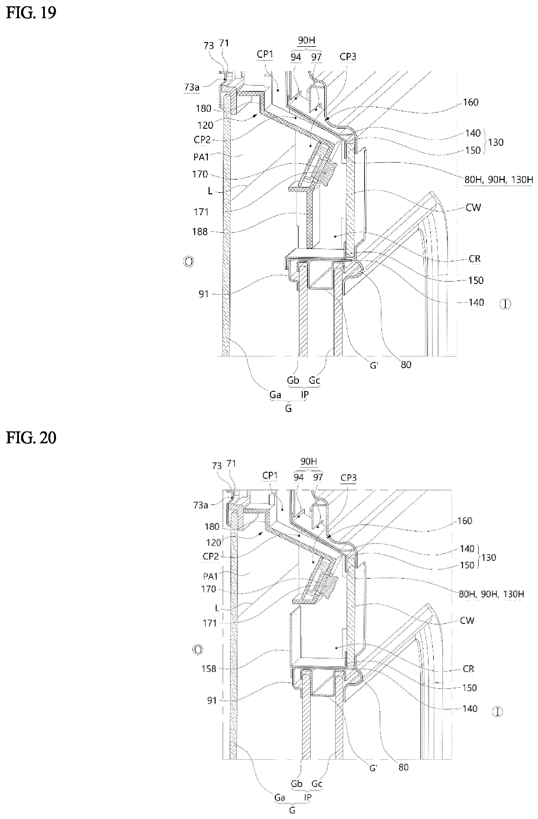

FIG. 19 is a cross-sectional view showing an interior structure of the door for a home appliance according to a third embodiment of the present disclosure; and
FIG. 20 is a cross-sectional view showing an interior structure of the door for a home appliance according to a fourth embodiment of the present disclosure.

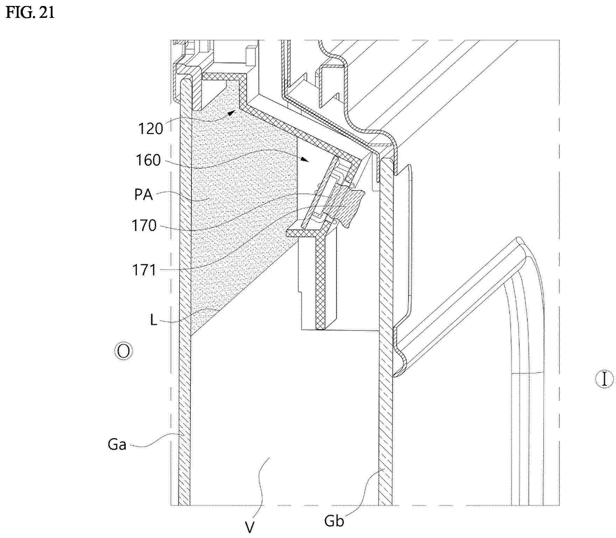

Fig. 21 is a cross-sectional view showing the internal structure of a fifth embodiment of a door for a home appliance according to the present invention.

### DETAILED DESCRIPTION OF THE INVENTION

Hereinafter, some embodiments of the present disclosure are described in detail with exemplary drawings. When giving reference numerals to components in each drawing, it should be noted that identical components are given the same reference numerals as much as possible even if they are shown in different drawings. In addition, when explaining the embodiments of the present disclosure, if a detailed description of the related known configuration or function is determined to hinder understanding of the embodiments of the present disclosure, detailed description thereof is omitted.

The present disclosure relates to a home appliance and a door for a home appliance (hereinafter referred to as "a door 60"). Here, the home appliance may mean one that has a storage space 41 inside. The door 60 may be disposed in front of the storage space 41. Here, the front refers to a direction toward a user when the user is positioned in front of the home appliance. Referring to FIG. 1, an X-axis direction may be a direction directed to the front. A Y-axis direction may be a left-to-right width direction of the door 60. A Z-axis direction may be a vertical width direction, which is the height direction of the door 60. Below, the description will be on the basis of these directions.

The door 60 for a home appliance may be applied not only to the door 60 of a home appliance such as a cooking appliance, a refrigerator, a freezer, a kimchi refrigerator, a plant cultivation device, a clothes processor, a washing machine, a dryer, etc., but may also be applied to a door of furniture or a door of an entrance. The door of the present disclosure may be applied to various home appliances having one or more doors 60. These home appliances may include enclosed cooking appliances such as ovens and microwave ovens. Below, the door 60 of the present disclosure will be described as an example of application to a cooking appliance.

In this embodiment, electronic components may be placed inside the door 60. The electronic components may give the door 60 a variety of functions. For example, when the electronic component is an electronic component unit 100 (see FIG. 2), an internal image of the storage space 41 may be obtained through the electronic component unit 100. The door 60 may increase the internal illuminance of the storage space 41. For this purpose, the electronic component unit 100 may include an image acquisition module 120 and a lighting device (not shown).

As another example, a display device (not shown) as an electronic component may be disposed in the door 60. The display device may provide information about a home appliance to a user. A user may input manipulation commands through the display device.

A portion of the electronic component unit 100 or the display device may be provided inside the door 60. In this case, an electronic component such as the electronic component unit 100 or the display device may be connected to the main body 10 by wires to transmit and receive electric signals with a main control part provided in a main body 10 of a home appliance or to supply power thereto. In the following an electronic components disposed in the door 60 will be explained by using the image acquisition module 120 as an example.

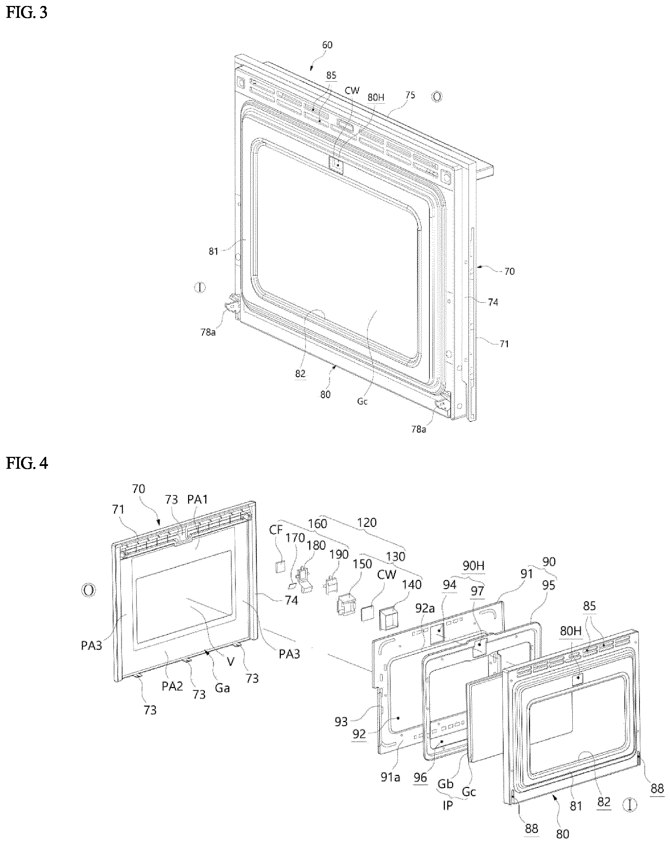

Referring to FIG. 4, in this embodiment, the image acquisition module 120 may include a camera assembly 160 and a window assembly 130, which will be described later. The camera assembly 160 may include a camera part 170 for capturing images of the storage space 41. The window assembly 130 may be disposed between the camera part 170 and the storage space 41, and allow the image of the storage space 41 to be seen by the camera part 170. Detailed structures thereof will be described below.

Referring to FIG. 1, the front surface of the cooking appliance of this embodiment may include the door 60 and a manipulation part 15. Reference numeral 16 refers to a display part exposed to the front surface of the manipulation part 15. The image acquisition module 120 described above may be disposed inside the door 60. The home appliance may be a built-in home appliance. For example, the home appliance may be a built-in cooking appliance.

Referring to FIG. 2, the angle of view through which the image acquisition module 120 photographs the storage space 41 is indicated by arrow ①. Additionally, in FIG. 2, a direction in which external light is transmitted to the interior of the door 60 is indicated by arrow ②. Here, the external light may be visible light reflected from external objects placed outside the home appliance. A path along which the visible light passes through a front panel Ga of the door 60 and is reflected inside the door 60 is represented by arrow ②.

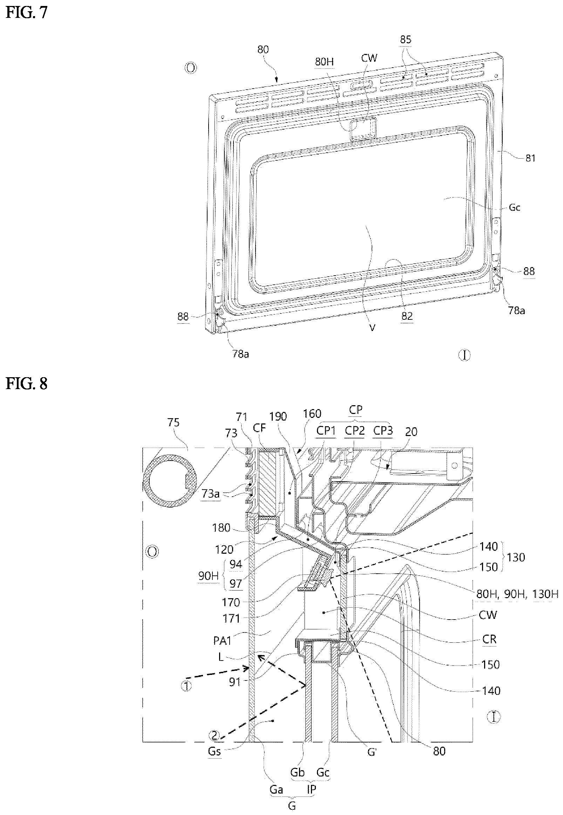

Accordingly, in this embodiment, when external visible light enters the interior of the door 60, the visible light may be reflected inside the door 60, but the reflected visible light does not reach the image acquisition module 120. This is because, in this embodiment, the image acquisition module 120 is disposed at a position outside an area Gs (see FIG. 8) in which the panels of the door, which are reflectors, face each other. More details will be described again below.

Referring to FIG. 3, a view of the door 60 as seen from a rear side thereof is shown. For reference, in the drawing, a reference numeral "I" indicates the inside of the door 60, i.e., the direction of the storage space 41, and a reference numeral "O" indicates the outside of the door 60, i.e., the outside of the home appliance. When viewed with reference to FIG. 3, the storage space 41 is disposed on the left, and the right corresponds to the outside of the door 60.

The door 60 may include a capture window CW. The capture window CW may allow light to be transmitted to the camera assembly 160 of the image acquisition module 120. That is, the camera part 170 of the camera assembly 160 may capture the image of the storage space 41 through the capture window CW. In this embodiment, the capture window CW may be disposed outside the perimeter part of a rear panel IP constituting a transparent part. When viewed with reference to FIG. 3, the capture window CW may be disposed higher than the edge of a second rear panel Gc. Accordingly, in this embodiment, the camera assembly 160 may capture the storage space 41 not through the second rear panel Gc, but through the separate capture window CW.

As another example, the capture window CW may be omitted. When the capture window CW is omitted, the camera assembly 160 may capture the storage space 41 through the rear panel IP. In this case, the camera assembly 160 may have a shooting angle set to be directed to the rear panel IP.

Components that constitute the door according to this embodiment will be described in detail with reference to FIGS. 3 and 4. A door body 70, 80, and 90 constituting the frame of the door 60 may include a plurality of frame components. In this embodiment, the door body 70, 80, and 90 may include a front frame 70, a rear frame 80, and an inner frame 90. These may be combined to form one door body 70, 80, and 90. Here, "front" refers to the front of the door 60 (the left on the basis of FIG. 4).

The front frame 70 may be disposed at the front of the door body 70, 80, and 90. More precisely, the front frame 70 may constitute the front frame of the door body 70, 80, and 90. The front frame 70 may be configured in an approximately quadrangular shape. A front opening part 72 may be formed through the center of the front frame 70 to expose the door panel G. The front frame 70 may include front brackets 73 protruding from a lower end thereof, and the front brackets 73 may be combined with rear brackets (not shown) of the rear frame 80. Reference numeral 74 is a side cover part 74, and a wire harness (not shown) may be stored inside the side cover part 74. Reference numeral 75 refers to a door handle used to open and close door 60.

The front panel Ga may be in close contact with a rear surface of the front frame 70 among the opposite surfaces of the front frame 70. FIG. 4 shows a state in which the front panel Ga is in close contact with the rear surface of the front frame 70. In this case, the perimeter of the front frame 70 is wider than the perimeter of the front panel Ga, and accordingly, when the front panel Ga is in close contact with the rear surface of the front frame 70, an installation area (no reference numeral assigned) may be formed in a portion of the rear surface of the front frame 70 that is not covered by the front panel Ga. The installation area may be formed on a surface of the front frame 70 outside the edge of the door panel G.

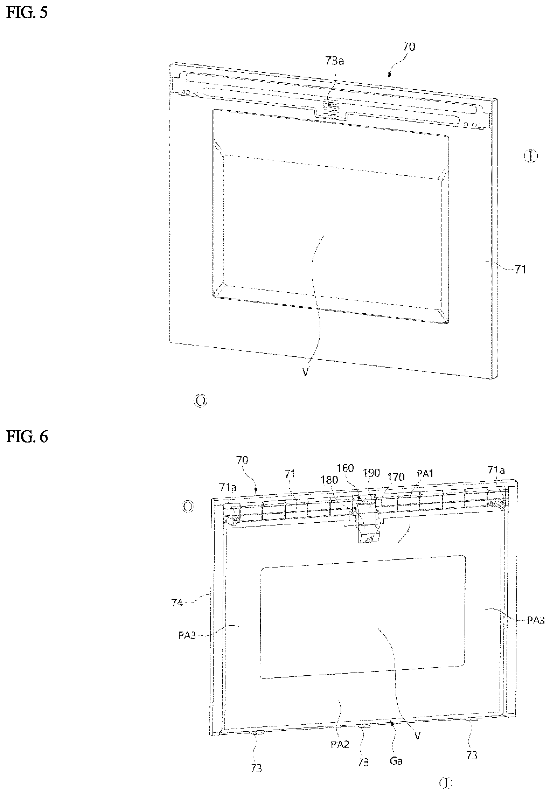

A mounting plate 71 may be disposed in the installation area. The mounting plate 71 may be disposed on a portion of the rear surface of the front frame 70 that is not covered by the front panel Ga. The mounting plate 71 may be made of a different material from the main body of the front frame 70. For example, the front frame 70 may be made of metal, and the mounting plate 71 may be made by injection molding resin. A mounting housing 180 and 190, which will be described later, may be disposed on the mounting plate 71, and a front coupling part 71a (see FIG. 6) may be made on the mounting plate 71 so that the mounting plate 71 is coupled to the rear frame 80 and the inner frame 90.

The front frame 70 may include a cooling part 73. The cooling part 73 allows outside air to flow into the door 60 through the front frame 70. The cooling part 73 may be made by penetrating the front frame 70. Referring to FIG. 8, a cooling hole 73a may be formed in the cooling part 73, so that the cooling part 73 may induce a flow of air in a front-to-rear direction (a left-to-right direction based on the drawing) of the door 60. The outside air introduced in this manner may be used to cool the camera assembly 160 and a door interior space.

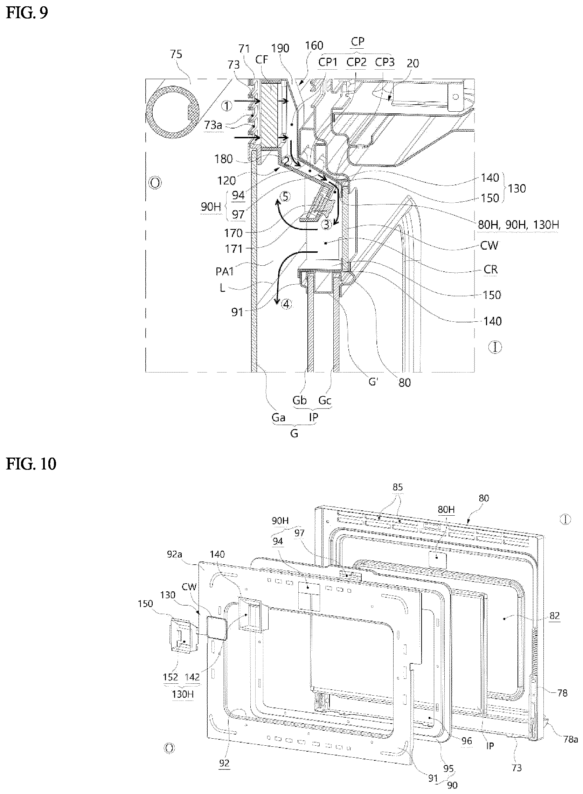

Referring to FIG. 10, the door body 70, 80, and 90 may include a door hinge 78. FIG. 10 illustrates the door hinge 78 disposed on the rear frame 80. The door hinge 78 may have a hinge hook arm 78a protruding therefrom. The hinge hook arm 78a, which is a part that is fixed to the main body of the home appliance, may protrude outward from the door 60.

Referring back to FIG. 4, with the door panel G disposed between the front frame 70 and the rear frame 80, the rear frame 80 may be coupled to the front frame 70. The rear frame 80 may include a rear frame body 81 having the shape of an approximately quadrangular frame. When the door 60 is closed, the rear frame 80 may face the open entrance of the storage space 41. The rear frame body 81 may have a rear opening part 82 open at the center thereof. The rear opening part 82 may have a structure that is open in a front-to-rear direction so that the transparent part V may provide a view into the storage space 41. Reference numeral 88 indicates a hook arm passage hole through which the hinge hook arm 78a protrudes.

The rear opening part 82 of the rear frame 80 may not cover the transparent part V. However, the rear frame 80 may cover the image acquisition module 120. Accordingly, even when the door 60 is opened, most of the image acquisition module 120 is not exposed as it is covered by the rear frame 80. Only the camera part 170, which constitutes the image acquisition module 120, may be exposed through a rear penetration part 80H, which will be described later.

The rear frame 80 may include a cooling channel 85. Air drawn into the door 60 through the cooling channel may be delivered to the main body 10 of the cooking appliance, thereby performing a cooling function. Conversely, heat from the main body 10 of the cooking appliance may be introduced into the cooling channel 85 and then discharged through the interior of the door 60 to the outside.

The rear frame 80 may include the rear penetration part 80H. The rear penetration part 80H may be formed by penetrating the rear frame 80. The rear penetration part 80H may be regarded as a kind of shooting hole that allows the camera assembly 160 to capture the images of the interior of the storage space 41. The rear penetration part 80H may be connected to an inner penetration part 90H, which will be described below, to constitute a continuous body penetration part 80H and 90H. A window frame 140 and 150 to be described below may be disposed in the rear penetration part 80H and the inner penetration part 90H. This structure will be described again below.

The inner frame 90 may be coupled to the rear frame 80. The inner frame 90 may be disposed between the rear frame 80 and the front frame 70. The rear panel IP may be disposed between the inner frame 90 and the rear frame 80. Insulators (not shown) may also be disposed between the inner frame 90 and the rear frame 80. When the inner frame 90 is coupled to the rear frame 80, the rear panel IP and the insulators may be fixed.

In this embodiment, the inner frame 90 may include a first inner frame 91 and a second inner frame 95. The first inner frame 91 and the second inner frame 95 may respectively have a first inner opening part 92 and a second inner opening part 96, which are open in centers thereof, respectively. The first inner opening part 92 and the second inner opening part 96 may be connected to the rear opening part 82 to expose the transparent part V. The first inner frame 91 may have a hinge avoidance part 93 formed on a side surface thereof by being recessed from the side surface. The hinge avoidance part 93 may have a shape recessed to avoid a part on which the door hinge 78 is mounted. As another example, the inner frame 90 may be omitted or may be configured as a part of the rear frame 80.

The inner frame 90 may include the inner penetration part 90H. The inner penetration part 90H may be formed by penetrating the inner frame 90. The inner penetration part 90H may be regarded as a kind of shooting hole that allows the camera assembly 160 to capture the inside of the storage space 41. In this embodiment, a first inner penetration part 94 and a second inner penetration part 97 may be formed in the first inner frame 91 and the second inner frame 95, respectively. The first inner penetration part 94 and the second inner penetration part 97 may be connected to the rear penetration part 80H to constitute the continuous body penetration part 80H and 90H. The window frame 140 and 150 to be described below may be disposed in the rear penetration part 80H and the inner penetration part 90H.

In a rear surface 91a of the first inner frame 91, an inner rib 92a may be provided along the edge of the first inner opening part 92. The inner rib 92a may protrude toward the rear frame 80. The inner rib 92a may press the surface of the rear panel IP to fix the rear panel IP. Referring to FIG. 11, it can be seen that the inner rib 92a is in contact with the surface of a first rear panel Gb of the rear panel IP. The inner rib 92a may press the surface of the first rear panel Gb toward the rear frame 80, securing it without any clearance. The opposite surface of the rear panel IP, that is, the surface of the second rear panel Gc may be supported by a rear rib 84c provided on the rear frame 80. As a result, the opposite surfaces of the rear panel IP may be supported by the rear rib 84c and the inner rib 92a, respectively.

The first rear panel Gb and the second rear panel Gc constituting the rear panel IP may be spaced apart from the front panel Ga. A flow space in which air flows may be formed between the rear panel IP and the front panel Ga spaced apart from each other. Additionally, the rear panel IP may have an insulating space formed inside to prevent the internal heat of the storage space 41 from being transferred to the front, i.e., the door 60. Accordingly, the rear panel IP may be regarded as an insulating panel. As another example, the rear panel IP may consist of only one panel, or may consist of three or more panels. Referring to FIG. 8, a panel spacer G' may be disposed between the first rear panel Gb and the second rear panel Gc to maintain a gap.

Referring back to FIG. 4, the image acquisition module 120 may be disposed between the inner frame 90 and the front frame 70. The image acquisition module 120 may include the camera assembly 160 and the window assembly 130. The camera assembly 160 may be fixed to the front frame 70. The window assembly 130 may be fixed to the inner frame 90. A more detailed structure will be explained again below.

Referring to FIG. 5, the front frame 70 may have the cooling hole 73a which is open. The cooling hole 73a may be formed in the upper center of the front frame 70. As another example, the cooling hole 73a may be formed on the opposite sides or lower portion of the front frame 70. The cooling hole 73a may be formed at various locations by corresponding to the location of the image acquisition module 120. The transparent part V may be provided at a position closer to the center of the front frame 70 than the cooling hole 73a.

FIG. 6 shows the rear surface of an assembly in which the front frame 70 and the front panel Ga are combined. As is seen, the camera assembly 160 may be disposed on the front frame 70. More precisely, the mounting housing 180 and 190 and the camera part 170 of the camera assembly 160 may be fixed to the mounting plate 71 arranged on the upper part of the rear surface of the front frame 70. The mounting housing 180 and 190 may be disposed on the mounting plate 71 and cover the cooling hole 73a. Accordingly, outside air introduced into the cooling hole 73a may flow along the mounting housing 180 and 190. As another example, the mounting plate 71 may be omitted, and the mounting housing 180 and 190 may be directly fixed to the front frame 70.

When the mounting housing 180 and 190 are fixed to the mounting plate 71, a portion of the mounting housing 180 and 190 may protrude in the direction of the transparent part V. More precisely, a main housing part 180, which constitutes the mounting housing 180 and 190, may be disposed on the mounting plate 71, with a portion of the main housing part 180 extending in the direction of the transparent part V. The camera part 170 may be disposed in this extended portion. The main housing part 180 may be coupled to a flow path housing part 190 so that a cooling flow path may be formed therebetween. This structure will be explained again below.

As shown in FIG. 6, a panel perimeter part PA that surrounds the edge of the transparent part V may be formed on the front panel Ga. The panel perimeter part PA may have lower light transmittance than the transparent part V, preventing the storage space 41 from being seen therethrough. The panel perimeter part PA may include an upper perimeter part PA1 surrounding an upper edge of the transparent part V, a lower perimeter part PA2 surrounding a lower edge of the transparent part V, and a side perimeter parts PA3 surrounding opposite side edges of the transparent part V. The upper perimeter part PA1, the lower perimeter part PA2, and the side perimeter parts PA3 may be connected to each other to form an approximately quadrangular shape. In other words, the upper perimeter part PA1 may be referred to as a first perimeter part, the lower perimeter part PA2 may be referred to as a second perimeter part, and the side perimeter parts PA3 may be referred to as third perimeter parts.

The panel perimeter part PA may prevent components disposed on the rear side of the front panel Ga from being exposed. For example, the panel perimeter part PA may cover the image acquisition module 120, which will be described later. In this embodiment, the image acquisition module 120 may be disposed on the rear of the upper perimeter part PA1. For reference, FIG. 8 shows the image acquisition module 120 covered by the upper perimeter part PA1. The panel perimeter part PA may cover the parts, and may be printed with a specific color or shape to enhance the beauty of the door 60.

Referring to FIG. 7, the structure of the rear frame 80 is illustrated. The capture window CW constituting the window assembly 130 may be disposed in the rear penetration part 80H formed in the rear frame 80. The capture window CW may be exposed toward the storage space 41 through the rear penetration part 80H. The camera part 170 may be arranged behind the capture window CW, so that the storage space 41 may be photographed by the capture window CW.

FIG. 8 shows a cross-sectional view of the interior of the door 60. The door 60 may include the door interior space surrounded by the door bodies 70, 80, and 90 and the door panel G. The door interior space may be regarded as a space surrounded by the front panel Ga, the front frame 70, the rear frame 80, the inner frame 90, and the rear frame 80. The camera assembly 160 may be disposed in the door interior space.

The camera assembly 160 may be disposed at a position outside an area where the front panel Ga and the rear panel IP face each other. Here, the area in which the front panel Ga and the rear panel IP face each other may refer to a space between the rear surface of the front panel Ga and the front surface of the rear panel IP. In FIG. 8, the area in which the front panel Ga and the rear panel IP face each other (hereinafter referred to as "an intermediate area") is represented with the drawing symbol Gs. In this embodiment, the front panel Ga may have a wider perimeter part than the rear panel IP, and thus, the perimeter part of the front panel Ga may not face the rear panel IP, but face the inner frame 90.

When the camera assembly 160 is located outside the intermediate area Gs, external light may be prevented from being reflected and reaching the camera assembly 160. The front panel Ga and the rear panel IP may both be reflectors that reflect light well, but when the camera assembly 160 is located outside the intermediate area Gs, the reflected light does not reach the camera assembly 160. Referring to FIG. 8, some of external light (arrow ①) may be blocked by the panel perimeter part PA formed in the perimeter part of the front panel Ga and may not reach the camera assembly 160. Some of the external light (arrow ②) may pass through the transparent part V and be reflected on the rear panel IP, but the camera assembly 160, which is positioned outside the intermediate area Gs, may be outside the reach of the reflected light. Accordingly, the camera assembly 160 may accurately capture only images of the storage space 41, and external objects may not be captured together.

More precisely, on the basis of a direction orthogonal to a direction in which the front panel Ga and the rear panel IP are spaced apart from each other, the perimeter part of the front panel Ga may extend further outward than the perimeter part of the rear panel IP, and thus the panel perimeter part PA may be provided on the edge of the front panel Ga. In this case, the panel perimeter part PA may be formed to have lower light transmittance than the transparent part. The image acquisition module 120 may be disposed on the rear of the panel perimeter part PA and may be shielded on the front of the door 60. Referring to FIG. 8, the image acquisition module 120 may be disposed on the rear of the upper perimeter part PA1 of the panel perimeter parts PA.

In this embodiment, the entire image acquisition module 120 including the camera assembly 160 may be disposed at a position outside the intermediate area Gs. More precisely, the image acquisition module 120 may be disposed outside the perimeter part of the rear panel IP. Here, the perimeter part of the rear panel IP may refer to the edge of the rear panel IP, which is the upper end part of the rear panel IP on the basis of FIG. 8.

The image acquisition module 120 may be disposed on the rear of the panel perimeter part PA of the front panel Ga. When the image acquisition module 120 is placed on the rear of the panel perimeter part PA, the panel perimeter part PA may prevent the image acquisition module 120 from being exposed to the front of the door 60. In this embodiment, the image acquisition module 120 may be disposed on the rear of the upper perimeter part. More precisely, the image acquisition module 120 may be positioned outside the transparent part V on the basis of a boundary part L between the upper perimeter part and the transparent part V.

The camera assembly 160 may be spaced apart from the surface of the front panel Ga in the direction of the storage space 41. Referring to FIG. 8, the camera assembly 160 may be spaced rearward (to the right in the drawing) apart from the rear surface of the front panel Ga. When the camera assembly 160 is spaced apart from the surface of the front panel Ga in the direction of the storage space 41, (i) the camera assembly 160 may capture the storage space 41 at a position closer to the storage space 41, (ii) the camera assembly 160 may be prevented from being exposed to the outside through the front panel Ga, and (iii) light reflected from the rear panel IP may be more reliably prevented from reaching the camera assembly 160.

The camera assembly 160 may be positioned to be spaced apart from the front panel Ga and the rear panel IP. In this embodiment, the camera assembly 160 may be spaced apart from the surface of the front panel Ga toward the storage space 41, and at the same time, may be spaced outward from the edge of the rear panel IP. In this case, heat may be prevented from being directly transferred from the rear panel IP or the front panel Ga to the camera assembly 160.

The camera assembly 160 may be disposed closer to the capture window CW than to the surface of the front panel Ga. In this case, more accurate shooting is possible from a location closer to the storage space 41. However, although the heat of the storage space 41 may be better transferred to the camera assembly 160, outside air introduced through the cooling hole 73a may effectively cool the camera assembly 160.

The capture window CW that allows the storage space 41 to be seen may be provided outside the perimeter part of the rear panel IP. The capture window CW may be disposed between the camera part 170 and the storage space 41. As is seen in FIG. 8, the capture window CW may be disposed outside the upper edge of the rear panel IP. The camera part 170 may capture the storage space 41 through the capture window CW, not the rear panel IP. In this case, even if the light transmittance of the rear panel IP is lowered for the purpose of improving beauty or preventing reflection, the camera part 170 may obtain a clear image through the capture window CW with high light transmittance. Additionally, the camera part 170 may be disposed on the outside of the door 60 and capture the storage space 41 in an inclined direction, thereby securing a wider angle of view. In FIG. 8, a dotted line represents a range capture by the camera assembly 160.

The door body 70, 80, and 90 may include a cooling device CF which discharges air in the direction of the camera part 170. The cooling device CF may draw in outside air and discharge the air in the direction of the camera part 170. The cooling device CF may be configured as an axial fan. The cooling device CF and the camera part 170 may be controlled by one control part (not shown).

The cooling device CF may be disposed in the mounting housing 180 and 190. The cooling device CF, which is disposed in the mounting housing 180 and 190, may be disposed at a position corresponding to the cooling part 73. Accordingly, the cooling device CF may draw in outside air through the cooling hole 73a. The structure of the cooling device CF will be described again below.

FIG. 9 shows a path in which air flows in the direction of the camera part 170. The cooling device CF may draw in outside air through the cooling hole 73a (the direction of arrow ①). The air drawn in by the cooling device CF may flow toward the camera part 170 through the cooling flow path. More precisely, the drawn outside air may first be discharged to a first cooling flow path CP1 formed between the flow path housing part 190 constituting the mounting housing 180 and 190 and the cooling device CF. Continuously, the outside air passes through a second cooling flow path CP2 between the main housing part 180, which constitutes the mounting housing 180 and 190, and the window frame 140 and 150 (the direction of arrow ②). In addition, the outside air may pass through a third cooling flow path CP3 formed between the lower part of the main housing part 180 and the capture window CW, and in this process, the camera part 170 may be cooled (the direction of arrow ③).

Meanwhile, the outside air may flow into a capturing space CR while cooling the camera part 170. A portion of the air introduced into the capturing space CR may move to the intermediate area Gs, and may cool each of the surfaces of the front panel Ga and the rear panel IP (the direction of arrow ④). Another portion of the air introduced into the capturing space CR may move toward the rear of the camera part 170, that is, toward a substrate constituting the camera part 170, and may also cool the rear of the camera part 170 (the direction of arrow ⑤). The cooling flow paths will be described again below.

Referring to FIGS. 10 to 13, the mounting structure of the window assembly 130 will be described. The window assembly 130 may be disposed between the camera assembly 160 and the storage space 41, and thus the camera part 170 of the camera assembly 160 may photograph the storage space 41 through the window assembly 130. The window assembly 130 may be assembled separately from the camera assembly 160 and then mounted on the door body 70, 80, and 90.

The window assembly 130 may be disposed in the body penetration part 80H and 90H. The window assembly 130, which is arranged in the body penetration part 80H and 90H, may allow an image of the storage space 41 to be transmitted through the body penetration part 80H and 90H to the camera assembly 160. In this embodiment, the window assembly 130 may be disposed on the inner frame 90, and the camera assembly 160 including the mounting housing 180 and 190 may be disposed on the front frame 70.

The body penetration part 80H and 90H may include the inner penetration part 90H and the rear penetration part 80H as described above, and the window assembly 130 may be disposed to pass through the inner penetration part 90H and be adjacent to the rear penetration part 80H. More precisely, a portion of the window frame 140 and 150 constituting the window assembly 130 may pass through the inner penetration part 90H and enter the rear penetration part 80H. This is illustrated in FIG. 11.

The window assembly 130 may include the window frame 140 and 150 arranged in the body penetration parts 80H and 90H. The window frame 140 and 150 may be regarded as a frame for fixing the capture window CW. The window frame 140 and 150 may fix the position of the capture window CW and form the cooling flow path together with the camera assembly 160.

The window frame 140 and 150 may have the shape of an approximately quadrangular frame. The window frame 140 and 150 may be structured to surround the capture window CW, which is positioned at a center thereof. While the window frame 140 and 150 is fixed to the inner frame 90, the capture window CW may be mounted to the window frame 140 and 150. As another example, the capture window CW may first be assembled to the window frame 140 and 150, and then may be mounted to the inner frame 90. As another example, the window frame 140 and 150 may be integrally provided on the inner frame 90 or the rear frame 80.

The window frame 140 and 150 may include a mounting frame 140 and a pressing frame 150. As is seen in FIG. 10, the mounting frame 140 and the pressing frame 150 may respectively have a first penetration part 142 and a second penetration part 152 corresponding to each other. The first penetration part 142 and the second penetration part 152 may be connected to each other to form a frame penetration part 130H. The frame penetration part 130H may be connected to the body penetration part 80H and 90H so that the capture window CW is exposed toward the storage space 41.

The mounting frame 140 may be disposed in the body penetration part 80H and 90H, and may have the first penetration part 142 formed at a center thereof. The first penetration part 142 may be connected to the body penetration part 80H and 90H. The mounting frame 140 may keep the capture window CW fixed to the inner frame 90. More precisely, the mounting frame 140 may serve to temporarily fix the capture window CW before the capture window CW is coupled to the pressing frame 150.

The pressing frame 150 may be combined with the mounting frame 140. The second penetration part 152 which is connected to the first penetration part 142 may be formed in the center of the pressing frame 150. The pressing frame 150 may press and support the capture window CW in the direction of the body penetration part 80H and 90H. That is, the capture window CW, which is temporarily fixed to the mounting frame 140, may be completely fixed by the pressing frame 150.

Referring to FIG. 11, in this embodiment, since the first penetration part 142 is larger than the capture window CW, the capture window CW may pass through the first penetration part 142. However, since the capture window CW is larger than the rear penetration part 80H of the body penetration part 80H and 90H, the edge of the capture window CW may be caught on the edge of the rear penetration part 80H. When the mounting frame 140 is mounted in the body penetration part 80H and 90H, and the capture window CW is disposed in the first penetration part 142, the lower end of the capture window CW may be supported on a mounting lower part 142A of the mounting frame 140 corresponding to the lower edge of the first penetration part 142. The edge surface of the capture window CW may be supported by window support members 84A and 84B provided on the edge of the rear penetration part 80H.

Meanwhile, the capture window CW may be formed to be larger than the second penetration part 152 of the pressing frame 150. Pressing ribs 157 may protrude from the edge of the second penetration part 152. Each of the pressing ribs 157 may be formed in a direction of decreasing the width of the second penetration part 152. Accordingly, when the pressing frame 150 is coupled to the mounting frame 140 with the capture window CW put therebetween, the pressing ribs 157 of the pressing frame 150 may elastically support the edge surface of the capture window CW in the direction of the rear frame 80. Accordingly, the opposite surfaces of the capture window CW may be supported by the window support members 84A and 84B of the rear panel IP and the pressing ribs 157 of the pressing frame 150, respectively.

FIG. 12 shows the assembled appearance of the window assembly 130. As is seen in the drawing, the capture window CW may be exposed through the frame penetration part 130H formed by the mounting frame 140 and the pressing frame 150. The exposed portion may be exposed to the storage space 41 through the body penetration part 80H and 90H. The capture window CW may be made of a transparent material and allow light from the storage space 41 to be transmitted through the body penetration parts 80H and 90H and the frame penetration part 130H to the camera assembly 160. For reference, in the state of FIG. 12, the capture window CW may pass through the frame penetration part 130H, but since the edge of the capture window CW is caught by the window support members 84A and 84B of the rear panel IP, the capture window CW may be fixed in a front-to-rear direction.

Referring to FIG. 13, the mounting frame 140 may have the shape of an approximately quadrangular frame surrounding the first penetration part 142 at a center thereof. The mounting frame 140 may include the mounting lower part 142A, a mounting upper part 142B, and a pair of mounting side parts 142C. The first penetration part 142 may be formed between the mounting lower part 142A, the mounting upper part 142B, and the pair of mounting side parts 142C. Reference numeral 141 represents a mounting body, which is a part inserted into the body penetration part 80H and 90H.

In this case, the first penetration part 142 may have a width decreasing gradually toward the rear frame 80. In this case, the first penetration part 142 may have a naturally inclined structure, and this inclined structure may be the shooting angle of the camera part 170. In this embodiment, the mounting upper part 142B may be formed in a direction inclined downward toward the storage space 41, so that the overall width of the first penetration part 142 may decrease gradually.

The pressing frame 150, like the mounting frame 140, may have the shape of an approximately quadrangular frame surrounding the second penetration part 152 at the center of the pressing frame 150. The pressing frame 150 may include a pressing lower part 152A, a pressing upper part 152B, and a pair of pressing side parts 152C. The second penetration part 152 may be formed between the pressing lower part 152A, the pressing upper part 152B, and the pair of pressing side parts 152C.

Each of the pressing lower part 152A, the pressing upper part 152B, and the pair of pressing side parts 152C may include the pressing rib 157 in a direction of decreasing the width of the second penetration part 152. The pressing rib 157 may press the edge surface of the capture window CW. More precisely, the pressing ribs 157 may press the edge surface of the capture window CW toward the window support members 84A and 84B of the rear panel IP. Accordingly, opposite surfaces constituting the edge of the capture window CW may be supported by the pressing ribs 157 and the window support members 84A and 84B, respectively.

In this case, the mounting upper part 142B and the pressing upper part 152B may have a structure inclined downward toward the capture window CW. This inclined structure may be arranged to face a first inclined part 184 provided in the mounting housing 180 and 190 of the camera assembly 160, which will be described below, to form the second cooling flow path CP2. That is, the inclined structure of each of the mounting upper part 142B and the pressing upper part 152B may be a kind of guide surface for forming the cooling flow path.

The mounting frame 140 may include a first coupling piece 145, and the pressing frame 150 may include a second coupling piece 155 corresponding to the first coupling piece 145. The first coupling piece 145 and the second coupling piece 155 may be combined in a form that overlaps each other. In this state, a fastener (not shown) may be secured to pass through the first coupling piece 145 and the second coupling piece 155, or the first coupling piece 145 and the second coupling piece 155 may be coupled to each other by welding.

Referring to FIG. 11, the first coupling piece 145 and the second coupling piece 155 may be caught on the edge of the first inner penetration part 94 of the first inner frame 91 constituting the inner frame 90. Accordingly, the window assembly 130 may not be introduced further in the direction of the rear frame 80, and the installation position of the window assembly 130 may be determined. The first coupling piece 145 and the second coupling piece 155 may be secured to the edge of the first inner penetration part 94 through the fastener.

Next, the structure of the camera assembly 160 will be described with reference to FIGS. 14 to 17. The camera assembly 160 may be disposed on the mounting plate 71. The camera assembly 160 may be fixed to the mounting plate 71 so as to cover the cooling part 73 formed in the mounting plate 71. FIG. 14 illustrates the cooling part 73 covered by the camera assembly 160. As another example, the cooling part 73 may be omitted, and the camera assembly 160 may be disposed at various locations on the mounting plate 71 regardless of the cooling part 73.

The camera assembly 160 may include the camera part 170 and the mounting housing 180 and 190 for fixing the camera part 170. The mounting housing 180 and 190 may not only fix the camera part 170, but also have the cooling flow path for delivering outside air toward the camera part 170. With reference to FIG. 14, the upper part of the camera assembly 160 may be a part for introducing outside air and fixing the camera assembly 160, and the lower part of the camera assembly 160 may be a part for fixing the camera part 170.

Referring to FIG. 15, the mounting housing 180 and 190 may include the main housing part 180 and the flow path housing part 190. The main housing part 180 may be fixed to the front frame 70. The camera part 170 may be disposed in the main housing part 180. The flow path housing part 190 may be coupled to the main housing part 180. The cooling flow path may be formed between the flow path housing part 190 and the main housing part 180. The flow path housing part 190 may have a structure like a kind of cover that covers the cooling device CF.

A housing penetration part 181a may be formed at the center of the main housing part 180. The housing penetration part 181a may be connected to the cooling part 73. Accordingly, outside air may flow into the door 60 through the housing penetration part 181a. The outside air introduced in this way may be transmitted in the direction of the cooling flow path. The main housing part 180 may have a structure corresponding to the cooling part 73.

The cooling device CF may be disposed in the housing penetration part 181a. The cooling device CF may be a type of cooling fan. The cooling device CF may be configured as an axial fan and draw in air in the forward and backward directions. Although not shown, the cooling device CF, with the camera part 170, may be controlled and powered by the control unit together. As another example, the cooling device CF may be omitted. The cooling device CF may be omitted, and outside air may be introduced through the cooling part 73 without the cooling device CF.

Looking at the structure of the main housing part 180 in detail, the main housing part 180 may be composed of a housing body 181 and an extension body 183. The housing body 181 may be fixed to the front frame 70, more precisely, the mounting plate 71, and may have the housing penetration part 181a formed at the center of the housing body 181. The extension body 183 may be connected to the housing body 181 and may extend toward the storage space 41. The extension body 183 may extend in a downwardly inclined direction from the housing body 181 toward the storage space 41.

The camera part 170 may be disposed in the extension body 183. Since the extension body 183 extends in the inclined direction, the camera part 170 may have an inclined angle. As illustrated in FIGS. 15 and 16, the extension body 183 may include the first inclined part 184, a second inclined part 185, and a connecting side part 187. The first inclined part 184, the second inclined part 185, and the connecting side part 187 may form a three-dimensional structure surrounding the camera part 170. Referring to FIG. 16, the camera part 170 may be stored in a mounting space 189 surrounded by the first inclined part 184, the second inclined part 185, and the connecting side part 187.

The first inclined part 184 may be a flat plate structure extending to be inclined downward from the housing body 181. The second inclined part 185 may be provided at a different angle from the first inclined part 184. In this embodiment, the second inclined part 185 may be formed in a downwardly inclined direction toward the transparent part. The camera part 170 may be placed in the second inclined part 185. Reference numeral 186 indicates a shooting hole 186 formed in the second inclined part 185, and a lens 171 of the camera part 170 may be positioned in the shooting hole 186. The connecting side part 187 may constitute opposite side surfaces of the extension body 183.

The flow path housing part 190 may be coupled to the main housing part 180. When the flow path housing part 190 is coupled to the main housing part 180, the cooling device CF may be shielded. The flow path housing part 190 may set a direction in which outside air introduced into the cooling device CF flows. More precisely, the flow path housing part 190 may allow the introduced outside air to flow toward the camera part 170. The flow path housing part 190 may form a continuous cooling flow path from the cooling device CF toward the camera part 170.

Referring to FIG. 9, the flow path housing part 190 and the cooling device CF may be spaced apart from each other, and the first cooling flow path CP1 may be formed in a portion in which the flow path housing part 190 and the cooling device CF are spaced apart from each other. The second cooling flow path CP2 connected to the first cooling flow path CP1 may be formed between the main housing part 180 and the window frames 140 and 150. More precisely, the second cooling flow path CP2 may be formed between the first inclined part 184 of the main housing part 180 and the inclined plane formed by the mounting upper part 142B and the pressing upper part 152B constituting the window frame 140 and 150. The third cooling flow path CP3, connected to the second cooling flow path CP2, may be formed between the capture window CW and the second inclined part 185.

In this way, in this embodiment, the cooling flow path toward the camera part 170 may be formed between the camera assembly 160 and the window assembly 130. The second cooling flow path CP2 may be formed between the main housing part 180 constituting the camera assembly 160 and the window frame 140 and 150 constituting the window assembly 130.

Referring back to FIG. 15, the flow path housing part 190 may include a first flow body 191, a second flow body 193, and side bodies 194. The second flow body 193 may be disposed on an upper portion relative to the first flow body 191. The second flow body 193 may have a shape having a width decreasing gradually toward an upper end thereof. The inclined structure of the second flow body 193 may serve to guide outside air downward. The side bodies 194 may prevent outside air from leaking to opposite sides.

In this case, the lower end part of the first flow body 191 may be open downward. This open part may be open toward the first inclined part 184 of the main housing part 180. The first inclined part 184 may not be covered by the flow path housing part 190, but may be spaced apart from the surface of the window frame 140 and 150 constituting the window assembly 130 to form the second cooling flow path CP2 therebetween.

FIG. 17 illustrates a state in which the inner frame 90, the rear frame 80, and the window assembly 130 are omitted. Referring to this, the lower end part of the first flow body 191 is seen to be open downward. This open part may face the first inclined part 184, and as described above, the first inclined part 184 may face the window frame 140 and 150 to form the second cooling flow path CP2. The lower end part of the first flow body 191 may be arranged to be adjacent to the mounting upper part 142B and the pressing upper part 152B that constitute the window frame 140 and 150, so that the first cooling flow path CP1 may form a path continuous to the second cooling flow path CP2.

Referring to FIGS. 15 and 17, reference numeral 73b is a first fixing part 73b provided in the cooling part 73. A second fixing part 182b of the main housing part 180, and a third fixing part 192 of the flow path housing part 190 may be coupled to the first fixing part 73b. That is, when a fastener, such as a screw (not shown), passes through the third fixing part 192 and the second fixing part 182b and is coupled to the first fixing part 73b, the mounting housing 180 and 190 may be fixed to the mounting plate 71.

FIG. 18 illustrates an internal structure of the door for a home appliance according to a second embodiment of the present disclosure. To explain only difference from the previous embodiment, the capture window CW may be configured by stacking the plurality of capture panels CW1 and CW2 on top of each other. Each of the plurality of capture panels CW1 and CW2 constituting the capture window CW may be made of a transparent material and allow light to pass therethrough. For example, both the capture panels CW1 and CW2 may be made of glass and be stacked in a front-to-back direction to allow light to pass therethrough. Accordingly, when the plurality of capture panels CW1 and CW2 is provided, heat from the storage space 41 may be prevented from being transmitted to the camera part 170.

FIG. 19 illustrates the internal structure of the door for a home appliance according to a third embodiment of the present disclosure. To explain only difference from the previous embodiments, the door interior space may include a shielding fence 188 that blocks an area between the capturing space CR and the front panel Ga. The shielding fence 188 may block the capturing space CR, thereby preventing external light from reaching the camera part 170 after passing through the front panel Ga.

The shielding fence 188 may be provided between the lower part of the camera assembly 160 and the upper part of the rear panel IP. More precisely, the upper end part of the shielding fence 188 may face the lower part of the camera assembly 160, and the lower end part of the shielding fence 188 may face the upper part of the rear panel. In this embodiment, the shielding fence 188 may protrude from the main housing part 180 constituting the camera assembly 160. That is, the shielding fence 188 may be a part of the main housing part 180. More precisely, the shielding fence 188 may protrude downward from the lower end of the extension body 183 of the main housing part 180, that is, toward the edge of the rear panel IP.

The lower end part of the shielding fence 188 may face the pressing frame 150 constituting the window assembly 130, but may be spaced apart from the pressing frame 150. Air may flow through this spaced portion. In this embodiment, the lower end part of the shielding fence 188 may extend to a position spaced a predetermined distance from the bottom surface of the pressing frame 150 constituting the window assembly 130.

Accordingly, the shielding fence 188 may block the capturing space CR and prevent external light from reaching the camera part 170 after passing through the front panel Ga, and thus in this embodiment, the panel perimeter part PA may be formed relatively short. Referring to FIG. 19, it can be seen that the upper perimeter part PA1 is formed shorter compared to the previous embodiment (see FIG. 8). Even if the area of the panel perimeter part PA is reduced and an area through which external light is transmitted is increased, the shielding fence 188 may block the capturing space CR, so there is no risk that the light will reach the camera part 170.

FIG. 20 illustrates an interior structure of the door for a home appliance according to a fourth embodiment of the present disclosure. To explain only difference from the previous embodiments, the door interior space may include the shielding fence 158 that blocks the area between the capturing space CR and the front panel Ga. The shielding fence 158 may block the capturing space CR, thereby preventing external light from reaching the camera part 170 after passing through the front panel Ga.

The shielding fence 158 may be provided between the lower part of the camera assembly 160 and the upper part of the rear panel IP. More precisely, the upper end part of the shielding fence 158 may face the lower part of the camera assembly 160, and the lower end part of the shielding fence 158 may face the upper part of the rear panel. In the present embodiment, the shielding fence 158 may protrude from the pressing frame 150 constituting the window frame 140 and 150. That is, the shielding fence 158 may be a portion of the pressing frame 150.

The upper end part of the shielding fence 158 may face the camera assembly 160, but may be spaced apart from the camera assembly 160. Air may flow through this spaced portion. In this embodiment, the upper end part of the shielding fence 158 may extend to a position below the extension body 183 of the main housing part 180 constituting the camera assembly 160.

As in the previous embodiment, the shielding fence 158 may blocks the capturing space CR and prevent external light from reaching the camera part 170 after passing through the front panel Ga. Therefore, in this embodiment, the panel perimeter part PA may be formed relatively shorter. Referring to FIG. 20, it is seen that the upper perimeter part PA1 is formed shorter compared to the previous embodiment (see FIG. 8). Even if the area of the panel perimeter part PAis reduced and an area through which external light is transmitted is increased, the shielding fence 158 may block the capturing space CR, so there is no risk that the light will reach the camera part 170.

As shown in the embodiment illustrated in Fig. 21, an image acquisition module 120 including the camera assembly 160 may be arranged between the front panel Ga and the rear panel Gb comprising the door panel Ga, Gb. The transparent part V provided in the front panel Ga is formed at the center of the front panel Ga relatively to the panel perimeter part PA of the front panel Ga. The transparent part V may form a single continuous light transmission path together with the rear panel Gb. Drawing symbol L indicates a boundary between the transparent part V and the panel perimeter part PA.

The image acquisition module 120 is disposed between the plurality of panels Ga, Gb, at a position outside the transparent part V. As shown in Fig. 21, the image acquisition module 120 is disposed outside the transparent part V based on the height direction (up-down direction based on the drawing). The image acquisition module 120 may be disposed at a position where the front panel Ga and the rear panel Gb face each other in the front-back direction (left-right direction based on the drawing), but is disposed so as to be outside the transparent part V. In other words, the image acquisition module 120 may be disposed at a position where it faces the panel periphery PA in the front-back direction (left-right direction based on the drawing) outside the panel perimeter part V. In this way, the image acquisition module 120 is disposed at a position outside the transparent part V so as to avoid a path where external light is reflected.

The above explanation is merely an exemplary description of the technical idea of the present disclosure, and those skilled in the art to which the present disclosure belongs may make various modifications and variations without departing from the essential characteristics of the present disclosure. Accordingly, the embodiments disclosed in the present disclosure are intended to explain rather than limit the technical idea of the present disclosure, and the scope of the technical idea of the present disclosure is not limited by these embodiments. The scope of protection of the present disclosure should be interpreted by the claims below, and all technical ideas within the equivalent scope should be interpreted as being included in the scope of the claims of the present disclosure.

## Claims

1. A door for a home appliance, the door (60) comprising:
a door body (70,80,90) disposed in front of a storage space (41) of a home appliance;
a door panel (P) which is coupled to the door body (70,80,90) and comprises a plurality of panels (Ga, Gb), with a transparent part (V) formed in a center of the door panel (P); and
a camera assembly (160) which is disposed in a door (60) interior space surrounded by the door body (70,80,90) and the door panel (P) and obtains an image of the storage space (41),
wherein the plurality of panels (Ga, Gb) comprises:
a front panel (Ga) constituting a front surface of the door panel (P); and
a rear panel (Gb) disposed to be spaced apart rearward from the front panel (Ga),
wherein the camera assembly (160) is disposed at a position outside an area in which the front panel (Ga) and the rear panel (Gb) face each other.

2. The door of claim 1, wherein the camera assembly (160) is disposed outside a perimeter part (PA) of the rear panel (Gb).

3. The door of claim 1 or 2, wherein the camera assembly (160) is spaced apart from a surface of the front panel (Ga) in a direction of the storage space (41).

4. The door of any one of claims 1 to 3, wherein the camera assembly (160) is disposed on the door body (70,80,90) so as to be spaced apart from each of the front panel (Ga) and the rear panel (Gb).

5. The door of any one of claims 1 to 4, wherein the door body (70,80,90) comprises a capture window (CW) which allows the storage space (41) to be seen in a direction of the camera assembly (160).

6. The door of any one of claims 1 to 5, wherein a capture window (CW) which allows the storage space (41) to be seen is provided outside a perimeter part (PA) of the rear panel (Gb), and
the capture window (CW) is disposed between the camera assembly (160) and the storage space (41).

7. The door of claim 5, wherein the capture window (CW) is configured by stacking a plurality of capture panels (CW1, CW2) on top of each other.

8. The door of any one of claims 1 to 7, wherein the door body (70,80,90) comprises a cooling device (CF) which discharges air in a direction of the camera assembly (160), and
wherein the cooling device (CF) draws air from a front of the door body (70,80,90) and discharges the drawn air in the direction of the camera assembly (160).

9. The door of any one of claims 1 to 8, wherein on the basis of a direction orthogonal to a direction in which the front panel (Ga) and the rear panel (Gb) are spaced apart from each other, a perimeter part (PA) of the front panel (Ga) extends further outward than a perimeter part (PA) of the rear panel (Gb) so that a panel perimeter part (PA) is provided on an edge of the front panel (Ga),
the panel perimeter part (PA) is formed to have lower light transmittance than the transparent part (V), and
the camera assembly (160) is disposed on a rear of the panel perimeter part (PA).

10. The door of any one of claims 1 to 9, wherein a body penetration part (80H, 90H) is formed through the door body (70,80,90), and
a window assembly (130) is disposed in the body penetration part (80H, 90H),
wherein the window assembly (130) comprises:
a window frame (140, 150) disposed in the body penetration part (80H, 90H); and
a capture window (CW) that is disposed in the window frame (140, 150) and transmits light from the storage space (41) to the camera assembly (160).

11. The door of claim 11, wherein the window frame (140, 150) comprises:
a mounting frame (140) disposed in the body penetration part (80H, 90H) and having a first penetration part (142) formed in a center thereof so that the capture window (CW) is disposed in the first penetration part (142); and
a pressing frame (150) coupled to the mounting frame (140) and having a second penetration part (152) formed in a center thereof to be connected to the first penetration part (142), with the pressing frame (150) configured to press the capture window (CW) in a direction of the body penetration part (80H, 90H).

12. The door of any one of claims 1 to 11, wherein the camera assembly (160) comprises:
a mounting housing (180,190) fixed to the door body (70,80,90); and
a camera part (170) disposed in the mounting housing (180,190) and facing the storage space (41), and
wherein at least a portion of the mounting housing (180,190) is disposed on a rear of a panel perimeter part (PA) of the front panel (Ga).

13. The door of any one of claims 1 to 12, wherein a cooling hole (73a) through which outside air is introduced is formed in the door body (70,80,90), and
a cooling flow path connected to the cooling hole (73a) is formed between the camera assembly (160) and the door body (70,80,90).

14. The door of claim 12, wherein the mounting housing (180,190) comprises:
a main housing part (180) fixed to the door body (70,80,90), with the camera part (170) disposed in the main housing part (180); and
a flow path housing part (190) coupled to the main housing part (180), with a cooling flow path formed between the main housing part (180) and the flow path housing part (190),
wherein the main housing part (180) has a housing penetration part (181a) formed in a center thereof so as to draw outside air and transmit the air in a direction of the cooling flow path, and
a first end part of the cooling flow path is open toward the housing penetration part (181a), and a second end part of the cooling flow path is open toward the camera part (170).

15. The door of any one of claims 1 to 14, wherein the camera assembly (160), and a window assembly (130) which allows the storage space (41) to be seen are disposed in the door body (70,80,90),
a cooling flow path is formed between the camera assembly (160) and the window assembly (130), and
a first end part of the cooling flow path is connected to the outside of the door body (70,80,90), and a second end part of the cooling flow path is open toward a camera part (170) of the camera assembly (160).
